# EUROPÄISCHE PATENTSCHRIFT

(11) **EP 3 758 105 B1**
(45) Veröffentlichungstag und Bekanntmachung des Hinweises auf die Patenterteilung: **18.10.2023**
(21) Anmeldenummer: 20180244.4
(22) Anmeldetag: 16.06.2020
(51) Int. Cl.: H01M 4/04, C23C 2/04, C23C 2/18, C23C 2/26, C23C 2/28, C23C 4/18, C23C 4/00, C23C 4/04, C23C 4/08, C23C 4/123, H01M 4/38, H01M 10/0525, C23C 24/00, C23C 24/04

(54) **VERFAHREN ZUR LITHIIERUNG VON ELEKTRODEN VON LITHIUMBASIERTEN ELEKTRISCHEN ENERGIESPEICHERELEMENTEN SOWIE MIT DEM VERFAHREN HERGESTELLTES ELEKTRISCHES ENERGIESPEICHERELEMENT**
METHOD FOR THE LITHIATION OF ELECTRODES OF LITHIUM-BASED ELECTRICAL ENERGY STORAGE ELEMENTS AND ELECTRICAL ENERGY STORAGE ELEMENT PRODUCED BY THE METHOD
PROCÉDÉ DE LITHIATION DES ÉLECTRODES À PARTIR D'ÉLÉMENTS D'ACCUMULATEUR D'ÉNERGIE ÉLECTRIQUE À BASE DE LITHIUM AINSI QU'ÉLÉMENT D'ACCUMULATEUR D'ÉNERGIE ÉLECTRIQUE FABRIQUÉ SELON LEDIT PROCÉDÉ

(30) Priorität: 27.06.2019 DE 102019209397
(43) Veröffentlichungstag der Anmeldung: 30.12.2020
(73) Patentinhaber: Fraunhofer-Gesellschaft zur Förderung der angewandten Forschung e.V., 80686 München (DE); Technische Universität Dresden, 01069 Dresden (DE)
(72) Erfinder: Kaskel, Stefan, 01277 Dresden (DE); Althues, Holger, 01277 Dresden (DE); Schumm, Benjamin, 01277 Dresden (DE); Abendroth, Thomas, 01277 Dresden (DE); Schönherr, Kay, 01277 Dresden (DE)
(74) Vertreter: Pfenning, Meinig & Partner mbB

(56) Entgegenhaltungen:
- WO-A1-2017/120391
- US-A1- 2017 133 662
- ZHENG LIANG ET AL: "Composite lithium metal anode by melt infusion of lithium into a 3D conducting scaffold with lithiophilic coating", PROCEEDINGS OF THE NATIONAL ACADEMY OF SCIENCES, Bd. 113, Nr. 11, 29. Februar 2016 (2016-02-29), Seiten 2862-2867, XP055550589, ISSN: 0027-8424, DOI: 10.1073/pnas.1518188113
- CUI JIECHENG ET AL: "The recent advances in constructing designed electrode in lithium metal batteries", CHINESE CHEMICAL LETTERS, ELSEVIER, AMSTERDAM, NL, Bd. 28, Nr. 12, 2. Dezember 2017 (2017-12-02), Seiten 2171-2179, XP085310849, ISSN: 1001-8417, DOI: 10.1016/J.CCLET.2017.11.039

## Beschreibung

Die Erfindung betrifft ein Verfahren zur Lithiierung von Elektroden von lithiumbasierten elektrischen Energiespeicherelementen.

Aktuelle und zukünftige lithiumbasierte Elektroenergiespeicherelemente, wie z.B. Batterien sollen gesteigerte spezifische Energiedichten bei hoher Zyklenstabilität aufweisen. Für die Realisierung zyklenstabiler Zellen ist es notwendig, irreversible Lithiumverluste während der Lade- und Entladezyklen zu vermeiden bzw. auszugleichen. Je nach Zelltyp und Zellchemie können irreversible Lithiumverluste u.a. durch Bildung einer festen Grenzschicht zum Elektrolyten (solid electrolyte interface → SEI) oder beispielsweise durch parasitäre Nebenreaktionen auftreten. In diesen Fällen ist es erforderlich, zusätzliches Lithium in die Zelle einzubringen bzw. vorzuhalten, was durch Schaffung eines Lithium-Reservoirs erreicht werden kann. Dies ist z.B. bei Lithium-Ionen-Batterien der Fall.

Zudem gibt es lithiumbasierte Energiespeicher, bei denen die Elektrodenaktivmaterialien selbst kein Lithium beinhalten und sämtliches Lithium durch Additive oder Zusatzkomponenten in die Zelle eingebracht werden muss. Beispiele hierfür sind Lithium-Ionen-Kondensatoren oder Silizium-Lithium-Schwefel-Batterien. In diesen Fällen ist eine sogenannte Prälithiierung erforderlich.

Alternativ kann Lithium in Form von Lithiumpulver auf Anoden für Li-lonen-Zellen aufgebracht werden. Die Auftragung erfolgt in Pastenform und führt zu relativ rauen und porösen Strukturen mit großer Oberfläche, die zu gesteigerter SEI-Bildung führen.

Zusätzliches Lithium kann auch durch physikalische Gasphasenabscheidung (PVD) aufgetragen werden. Bei diesem Prozess wird Lithium verdampft und als dünne Schicht auf einem Substrat, z.B. Elektrode, abgeschieden. Dabei ist aber die große erforderliche Zeitdauer wegen der geringen Abscheiderate nachteilig.

Andere Elektroden (z.B. Graphit oder Silizium-Anoden) können elektrochemisch prälithiiert werden. Dort muss die Elektrode in einer elektrochemischen Zelle gegen eine Lithium-spendende Opferelektrode (bspw. metallisches Lithium) verbaut werden. Auf diese Weise wird der Opferelektrode das Lithium entzogen und in die Zielelektrode eingelagert. Anschließend wird die Prälithiierungs-Zelle deassembliert und die lithiierte Elektrode in die Zielzelle verbaut.

So sind von Zheng Liang u.a. in "Composite lithium methal anode by melt infusion of lithium into a 3D conducting scaffold with lithiophilic coating"; Proceedings of the National Academy of Sciences; Bd. 113, Nr. 11, 29.02.2016; Seiten 2862-2867; ISNN:0027-8424, DOI: 10.1073/pnas.1518188113 Möglichkeiten beschrieben, mit denen das Wachstum von Dendriten beeinflusst werden kann.

US 2017/0133662 A1 betrifft Lithiummetallanoden für Lithiumbatterien mit reduzierter Volumenveränderung während der Lade- und Entladephasen.

Von Jiecheng Cui u.a. sind aus "The recent advances in constructing designed electrode in lithium metal batteries"; Chinese Chemcals letters; Bd. 28, Nr. 12, 02.12.2017; Seiten 2171-2179, ISSN: 1001-8417, DOI: 10.1016/J.CCLET.2017.11.039 ebenfalls Angaben zur Beeinflussung der Dendritausbildung bekannt.

Mit den in diesen drei vorab genannten Dokumenten soll einer Dendritbildung von Lithium sowie größeren Schwankungen des Volumens von Energiespeicherelementen bei Lade- und Entladezyklen entgegen gewirkt werden.

Aus DE 10 2017 208 218 A1 sind Möglichkeiten zur verbesserten Beschichtung mit einem Alkalimetall mittels einer Vermittlerschicht sowie ein entsprechend beschichtete Substrat beschrieben, wobei es sich bei dem Alkalimetall bevorzugt um Lithium oder Natrium handelt.

Die Offenbarung von WO 2017/120391 A1 ist auf Batterien mit großer Speicherkapazitätsdichte und ein entsprechendes Herstellungsverfahren gerichtet.

Außerdem ist ein Elektrodenmaterial zur Lithium zur Interkallation mit Lithium für elektrochemische Zellen aus US 5 759 719 A bekannt.

Es ist daher Aufgabe der Erfindung, Möglichkeiten für einen einfachen und kostengünstigen sowie dauerhaften Erhalt der Elektroenergiespeicherkapazität von lithiumbasierten Elektroenergiespeicherelementen anzugeben.

Erfindungsgemäß wird diese Aufgabe mit einem Verfahren, das die Merkmale des Anspruchs 1 aufweist, gelöst. Vorteilhafte Weiterbildungen und Ausführungsmöglichkeiten sind mit in untergeordneten Ansprüchen bezeichneten Merkmalen realisierbar.

Bei dem Verfahren wird Lithium mit einer Menge in eine jeweilige Elektrode eingebracht, mit der irreversible Lithiumverluste, die während Entlade- und Ladevorgängen auftreten, vollständig ausgeglichen werden oder im Falle von unlithiierten Materialien, die gesamte benötigte Lithium-Menge bereit gestellt wird. Dabei wird das geschmolzene Lithium in flüssiger Phase während des Auftrags auf eine Oberfläche oder des Einbringens in einen jeweiligen Elektrodenwerkstoff eingesetzt. Für ein vollständiges Ausgleichen der Verluste werden 1 % - 20 % der Elektrodenkapazität oder für die gesamte für eine Lithiierung der Elektrode benötigte Lithiummenge werden 101 % - 120 % der Elektrodenkapazität eingesetzt.

Zwischen dem Lithium und der Oberfläche von Elektrodenwerkstoff und/oder einer Oberfläche eines temporären Substrats, auf der eine Lithiumschicht aufgebracht wird, wird eine Schicht, die mit einem lithiophilen Material gebildet ist, das mit dem flüssigen Lithium durch zumindest teilweise chemische Reduktion reagiert, interkaliert oder legiert, aufgebracht oder ausgebildet. Im Speziellen ist dies ein Metalloxid. Bei der chemischen Reaktion sollte zumindest teilweise eine chemische Reduktion des Metalloxids erreicht werden.

Das flüssige Lithium sollte anschließend durch Erstarren in die feste Phase überführt werden oder die Elektrode kann durch weitere Prozessschritte direkt lithiiert werden.

Als lithiiophile Materialien können Metalloxide, insbesondere Zinkoxid, Kupferoxid, Nickeloxid, Zinnoxid, Interkalationsmaterialien, insbesondere Kohlenstoffe, oder Legierungsbildner, insbesondere Silizium, eingesetzt werden.

Lithium soll in einer Menge, die 1 % bis 120 % der Kapazität der Elektrode des jeweiligen elektrische Energiespeicherelements entspricht, auf-oder eingebracht werden. Dabei wird die jeweilig erforderliche Menge von der Art des Elektrodenwerkstoffs und des jeweiligen elektrische Energiespeicherelements beeinflusst. So ist es beispielsweise in typischen Li-lonen-Zellen notwendig 1 %- 20% Kapazität zuzuführen, während Li-lonen-Kondensatoren, Lithium-Schwefel-Zellen und ähnliche Systeme 100 % - 120 % Kapazität zugeführt bekommen müssen.

So wird eine Oberfläche des Elektrodenwerkstoffs, eines Separators und/oder eines temporären Substrats mit dem jeweiligen lithiophilen Material beschichtet und anschließend flüssiges Lithium mit über die jeweilige Oberfläche konstanter Schichtdicke aufgebracht. Die Lithiumschicht kann dabei durch Laserschmelzen, Schmelzen mittels einer Heizvorrichtung, Rakeln, Aufbringen mittels einer Schlitzdüse, Streichen, Sprühen von Alkalimetallschmelzen, Tauchbeschichten, Gasphasenverfahren, thermisches Spritzen und bzw. oder Laminieren aufgebracht werden. Dabei sollte eine konstante Schichtdicke, mit der die jeweilige Menge an Lithium bestimmt ist, über die jeweilige beschichtete Oberfläche eingehalten werden.

Bei einer Beschichtung einer Oberfläche eines temporären Substrats wird nach dem Aufbringen der Lithiumschicht, diese Oberfläche mit der Oberfläche der jeweiligen Elektrode oder eines Separators in berührenden Kontakt gebracht und infolge erhöhter Temperatur, wirkendem Druck und/oder die Wirkung eines elektrischen Feldes wird diese Lithiumschicht nach eventueller erneuter Verflüssigung, Erweichen, fließfähig machen, von der Oberfläche des temporären Substrats auf eine Oberfläche der jeweiligen Elektrode oder eines Separators übertragen.

Es besteht auch die Möglichkeit, lithiophile Partikel in den Elektrodenwerkstoff einzubringen und dann die jeweilige Oberfläche der Elektrode mit flüssigem Lithium zu beaufschlagen, wie dies bereits erläutert worden ist.

Bei einer weiteren erfindungsgemäßen Alternative können Lithiumpartikel gemeinsam mit dem jeweiligen Metalloxid in den jeweiligen Elektrodenwerkstoff eingebracht und dann das Lithium verflüssigt werden, dabei reagiert es mit dem Metalloxid chemisch und ist nach dem Erstarren im Elektrodenwerkstoff enthalten. Das Einbringen der beschichteten Lithiumpartikel kann bei der Herstellung des Elektrodenwerkstoffs vor oder bei seiner Applikation auf einen Separator oder Elektrolyten durchgeführt werden. Die beschichteten Lithiumpartikel sollten im Elektrodenwerkstoff homogen verteilt sein. Die jeweilige Lithiummenge kann man über die Partikelgröße und Partikelanzahl bei Beachtung der jeweiligen physikalischen Dichte des Lithiums berücksichtigen.

Eine mit dem lithiophilen Material gebildete Schicht kann mit einer Dicke zwischen 0,1 nm und 1000 nm, vorzugsweise zwischen 1 nm und 500 nm, besonders vorzugsweise zwischen 10 nm und 200 nm ausgebildet werden.

Diese Schicht kann einfach durch Oxidation des Werkstoffs aus dem ein jeweilige Elektrode, ein Separator und/oder ein temporäres Substrat an der jeweiligen Oberfläche ausgebildet werden.

Es besteht aber auch die Möglichkeit, die mit Metalloxid gebildete Schicht mit einer Suspension, in der Partikel des Metalloxids enthalten sind, als Beschichtung auf die jeweilige Oberfläche oder die Oberfläche von Lithiumpartikeln aufzubringen. Nach dem Suspensionsauftrag kann der Flüssigkeits- und ggf. ein Binderanteil der Suspension, bevorzugt durch Verdampfen entfernt werden. Bei diesem Vorgehen können größere Dicken der Metalloxidschicht auftreten.

Als Elektrodenwerkstoff kann man Kohlenstoff/Graphit-, Silicium-, NiMnCo-Oxid- oder MnO₂-haltige Materialien einsetzen.

Es können Lithiumreservoirs erhalten oder es kann eine Prälithiierung unter Verwendung dünner (Schichtdicke 0,5 µm - 50 µm) Lithiumschichten durchgeführt werden. In einer erfindungsgemäßen Alternative kann analog zu dem Schmelzbeschichtungsverfahrens, wie es in DE 10 2017 208 218 A1 beschrieben ist, vorgegangen werden. Die Besonderheit des Lösungsweges besteht darin, dass die benötigte Lithiummenge bzw. der Lithiumüberschuss exakt über die abgeschiedene Lithium-Schichtdicke eingestellt werden kann, was somit eine exakte Abstimmung auf die Kapazität der verwendeten Elektrode erlaubt.

Die jeweilige Elektrode kann an einer Oberfläche direkt mit Lithium beschichtet werden. Dazu wird eine lithiophile Schicht auf eine Oberfläche einer jeweiligen Elektrode, eines Separators und/oder eines temporären Substrats aufgetragen oder dort ausgebildet. Diese Schicht ist im Wesentlichen mit lithiophilem Material gebildet. Anschließend kann eine exakt auf die Kapazität der jeweiligen Elektrode abgestimmte Lithiumschichtdicke mittels Schmelzverfahren appliziert werden. Dabei soll durch die applizierte Lithium-Dünnschicht, je nach Anwendungsfall, ein Bereich von 1 % -120 % der Elektrodenkapazität eingehalten werden können.

Alternativ kann das Lithium auf einer von der zu lithiierenden Elektrode verschiedenen Substratoberfläche eines temporären Substrats aufgebracht werden, um dann durch ein Transferverfahren (Zeit, Temperatur, Druck, elektrisches Feld) gezielt eine Elektrode zu lithiieren. Das von der zu lithiierenden Elektrode verschiedene Substrat wird dabei nur temporär genutzt. Somit ist es möglich, Zellkomponenten (z.B. Separator) mit einer Lithiummetallbeschichtung auszurüsten und in einer Zelle eines Elektroenergiespeicherelements zu verbauen, oder das Lithium in einem dem Zellbau vorgelagerten Prozessschritt über ein temporäres Substrat in die jeweilige Elektrode zu transferieren. Für ein temporäres Substrat kann man Kupfer, Nickel, Edelstahl, Polymerfolien oder ähnliches als Werkstoff einsetzen. Die jeweilige zu beschichtende Oberfläche eines temporären Substrats sollte eben und planar oder komplementär zur Oberfläche, auf die die Lithiumschicht transferiert werden soll, ausgebildet sein.

Der Vorteil der Erfindung liegt in der Möglichkeit die Menge des abgeschiedenen Lithiums sehr genau einzustellen, was über die Menge an Lithium, insbesondere über die Schichtdicke einer Lithiumbeschichtung erreicht werden kann und damit genau den Lithiumverlust auszugleichen bzw. den Grad der Lithiierung (1 %-120 %) exakt auf die Kapazität der jeweiligen Elektrode anzupassen.

Mit der Erfindung wird kein unnötiges Lithium in das jeweilige Elektroenergiespeicherelement verbaut und seine Dicke kann minimiert werden.

Es können folgende Vorteile im Vergleich zu konkurrierenden Ansätzen erreicht werden:
- im Vergleich zu dicken Lithiumfolien: Beim erfindungsgemäßen Vorgehen kann die exakte benötigte Menge an Lithium eingebracht werden. Mit dicken Li-Folien ist dies häufig überhaupt nicht möglich. Im Vergleich zur Verwendung von Lithiumpartikeln innerhalb der Schicht: diese Partikel werden verbraucht - zurück bleiben unerwünschte Hohlräume. Beim erfindungsgemäßen Verfahren entstehen derartige Hohlräume nicht.
- Vorteil im Vergleich zur Elektrochemischen Prälithiierung: Der Aufwand wird beim erfindungsgemäßen Vorgehen deutlich reduziert.
- Vorteil im Vergleich zur PVD: Es werden ähnliche Schichten erzeugt. Die Herstellung der Schichten ist beim erfindungsgemäßen Verfahren jedoch deutlich effizienter.

Es kann eine Lithiierung von Elektroden für lithiumbasierte Energiespeicher, z.B. folgende Sekundärbatterien
o Lithium-Ionen-Batterien (u.a.Graphit-Anoden, Si-basierte Anoden, unlithiierte Kathoden (z.B. MnO2))
o Lithium-Schwefel-Batterien (Si oder Kohlenstoffanoden)
o Festkörperbatterien (Si oder Kohlenstoffanoden)
o Li-Luft-Batterien (Si oder Kohlenstoffanoden)
sowie von Elektroden für lithiumbasierte Kondensatoren, z.B.
o Li-lonen-Kondensatoren erreicht werden.

Nachfolgend soll die Erfindung beispielhaft näher erläutert werden.

Dabei zeigen:
- Fig. 1: eine schematische seitliche Ansicht eines Lithiumauftrags mittels einer beheizten Düse;
- Fig. 2: eine Figur 1 entsprechende Ansicht des Lithiumauftrags mittels eines beheizten Reservoirs;
- Fig. 3: eine Figur 1 entsprechende Ansicht des Lithiumauftrags mittels Laserschmelzen;
- Fig. 4: eine Figur 1 entsprechende Ansicht des Lithiumauftrags mittels Rakeln;
- Fig. 5: eine Figur 1 entsprechende Ansicht des Lithiumauftrags mittels Streichen;
- Fig. 6: eine Figur 1 entsprechende Ansicht des Lithiumauftrags mittels einer Tauchbeschichtung;
- Fig. 7: eine Figur 1 entsprechende Ansicht des Lithiumauftrags mittels einer Sprühbeschichtung und
- Fig. 8: eine Figur 1 entsprechende Ansicht des Lithiumauftrags mittels Durchlaufdüse.

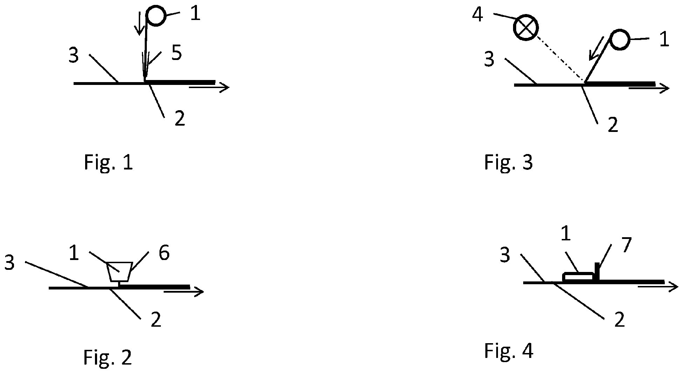

Figur 1 zeigt in einer schematischen seitlichen Ansicht ein Verfahren zum Lithiieren einer Oberfläche einer Elektrode 2. Die Elektrode 2 ist im dargestellten Ausführungsbeispiel eine Graphitelektrode, die durch Dipcoating mit einer Zinkoxid-Schicht als Schicht 3 versehen wurde. Somit ist die Schicht 3 in direktem, also unmittelbar berührenden Kontakt mit der Elektrodenoberfläche. Ein Aufschmelzen des Lithiums wird durch eine beheizte Düse 5 bewirkt. Die Lithiumfolie wird durch die elektrisch beheizte Düse 5 geführt und hierbei aufgeschmolzen. Fluchtend unterhalb der Düse 5 wird die Elektrode 2 vorbeigeführt, auf dem wiederum die Schicht 3 angeordnet ist. Das geschmolzene Lithium trifft nun auf eine der Düse 5 zugewandte Oberfläche der Schicht 3, erkaltet dort und geht wieder in einen festen Aggregatzustand über, so dass sich eine geschlossene, porenfreie Lithiumschicht ausbildet, die in direktem Kontakt mit der Schicht 3 steht.

Wie in Figur 2 in einer Figur 1 entsprechenden Ansicht gezeigt, kann auch ein, vorzugsweise elektrisch, beheiztes Reservoir 6 verflüssigtes Lithium aufnehmen und durch eine der Oberfläche der Elektrode 2 zugewandte Schlitzdüse des Reservoirs 6 das Lithium auf die Schicht 3 auftragen. Das Reservoir 6 ist hierbei trichterförmig, um ein gezieltes Ausfließen durch die Schlitzdüse zu ermöglichen. Wiederkehrende Merkmale sind in dieser Figur und den folgenden Figuren mit identischen Bezugszeichen versehen.

In einer weiteren Ausführungsform der Erfindung, die in Figur 3 dargestellt ist, wird durch eine Laserstrahlungsquelle 4 elektromagnetische Laserstrahlung auf einen Auftreffpunkt des folienförmigen Lithiums auf die Elektrodenoberfläche 2 bzw. die Schicht 3 gerichtet, so dass das folienförmige Lithium an dieser Stelle verflüssigt wird und durch die Schicht 3 aus Zinkoxid auf der Oberfläche der Elektrode 2 angeordnet wird.

In einer weiteren Ausführungsform, die in Figur 4 wiedergegeben ist, wird die Elektrode 2 beheizt und Lithium 1 liegt als Schmelze auf der Oberfläche der Elektrode 2 auf. Mittels einer Rakel 7 wird das Lithium mit einer definierten Dicke abgestreift und auf die Schicht 3, die wie zuvor einer Quelle des aufzubringenden Lithiums 1 zugewandt ist, aufgebracht.

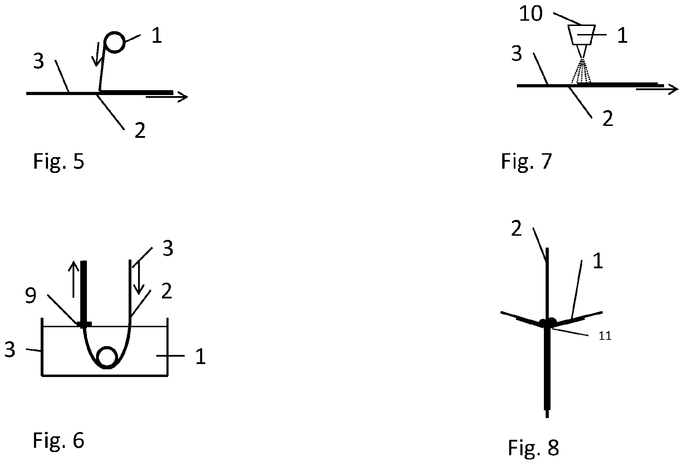

In dem in Figur 5 dargestellten Ausführungsbeispiel wird kalte Lithiumfolie über eine heiß erwärmte Elektrode 2 geführt. Die Elektrode 2 wird hierbei durch einen elektrischen Ofen geführt und dabei erwärmt. Durch Streichen der kalten Lithiumfolie über die Oberfläche der Elektrode 2 schmilzt die Lithiumfolie am Auftreffpunkt auf der auf der Elektrodenoberfläche vorhandenen Schicht 3 auf und benetzt diese Schicht 3 flächig. Nach Erkalten liegt somit wiederum eine geschlossene Lithiumbeschichtung vor.

Figur 6 zeigt wiederum in einer schematischen seitlichen Ansicht ein beheiztes Becken 8, in dem geschmolzenes Lithium enthalten ist. Die Elektrode 2 mit darauf aufgebrachter Schicht 3 wird durch das Becken 8 geführt. Beim Verlassen des Beckens 8 ist es möglich, überschüssiges Lithium an einem Abstreifer 9 abzustreifen und dadurch eine beidseitig identische Schichtdicke der Lithiumschicht auf der Oberfläche der Elektrode 2 einzustellen.

In Figur 7 ist ein Ausführungsbeispiel gezeigt, bei die Beschichtung der mit der Schicht 3 versehenen Elektrodenoberfläche mittels einer Sprühbeschichtung erfolgt, bei der aus einer Sprühdüse 10 auf das unterhalb der Sprühdüse 10 vorbeilaufende Substrat das Lithium abgeschieden wird.

Bei dem in Figur 8 wiedergegebenen Ausführungsbeispiel erfolgt eine beidseitige Beschichtung der Elektrode 2, indem von beiden Seiten Lithium als Festkörper zu der Elektrode 2 geführt wird. Da die Elektrode 2 durch eine beheizte Durchlaufdüse 11 geführt wird, bevor das Lithium auf die Elektrodenoberfläche die auf beiden Seiten der Elektrode 2 angeordnete Schicht 3 auftrifft, dort aufschmilzt und die Elektrode 2 derart beschichtet, dass eine geschlossene Lithiumschicht ausgebildet wird.

Mit dem in verschiedenen Ausführungsformen beschriebenen Verfahren kann somit durch Aufbringen einer dünnen, typischerweise zwischen 0,1 nm und 1000 nm dicken lithiophilen Schicht 3 eine großflächige Abscheidung von Lithium auf unterschiedlichen Substraten 2 ermöglicht werden. Als Elektrodenwerkstoffe können beispielsweise Kohlenstoff/Graphit-, Silicium-, NiMnCo-Oxid- oder MnO2-haltige Materialien verwendet werden.

Die Schicht 3 kann aus einem Oxid von Silizium, Zinn, Zink, Antimon, Aluminium, Magnesium, Bismut gebildet sein.

Generell kann eine oxidische Vermittlerschicht 3 verwendet werden, die durch Lithium zumindest teilweise (aber auch vollständig) reduziert wird. Diese oxidische Vermittlerschicht kann also ein Metalloxid aufweisen, wobei als das Metalloxid Oxide oder Oxidverbindungen folgender Elemente in Frage kommen: Magnesium, Aluminium, Silizium, Calcium, Titan, Vanadium, Chrom, Mangan, Eisen, Cobalt, Nickel, Kupfer, Zink, Zirkonium, Molybdän, Indium, Zinn, Antimon, Blei, Bismut. Diese Materialien können auch ohne Oxidation eingesetzt werden, da sie mit Lithium Legierungen bilden, welche ebenfalls eine lithiophile Wirkung aufweisen. Desweiteren können Materialien eingesetzt werden, in welche das Lithium interkaliert, z.B. Kohlenstoffe wie Graphit oder Hard Carbons.

Zum Ausbilden der Schicht 3 auf einer Oberfläche eines temporären Substrats können, wie zum Aufbringen des Lithiums 1 verschiedene Prozeduren angewandt werden. So kann beispielsweise eine 12 µm dicke Kupferfolie in einem vorgeheizten Muffelofen (oder in einem Hochtemperaturdurchlaufofen für kontinuierliche Substrate) bei 300 °C bis 500 °C oberflächlich oxidiert werden, um eine dünne Oxidschicht mit einer Dicke zwischen 0,1 nm und 1000 nm, die als die Schicht 3 dient, zu erhalten. In gleicher Weise kann auch durch Oxidation einer 20 µm dicken Nickelfolie eine Nickeloxidschicht bei 600 °C ausgebildet werden. Mittels Röntgenbeugung (XRD, X-ray diffraction) kann die Bildung von Cu₂O nachgewiesen werden. In einer Ar-Umgebung kann anschließend festes Lithium in Kontakt mit der oxidierten und auf 200 °C aufgeheizten Kupferfolie gebracht werden, was zum Aufschmelzen des Lithiums führt. Mittels der Rakel 7 kann dann, wie in Figur 4 gezeigt, eine 1 µm bis 50 µm dicke Lithiumschicht 1 generiert werden.

In einem weiteren Ausführungsbeispiel kann eine Graphitelektrode als Elektrodenwerkstoff für 30 s in einer ethanolischen SnCl₂-Lösung oder SbCl₃-Lösung (0,15 M) beschichtet, 5 Minuten getrocknet und anschließend an Luft im vorgeheizten Muffelofen bei 300 °C für 5 Minuten getempert werden. Die auf diese Weise hergestellte Elektrode 2 wird anschließend in eine Lithiumschmelze getaucht.

In einem weiteren Ausführungsbeispiel kann auch eine Graphit-Elektrode für 30 s in eine isopropanolische Zinkacetat-Lösung beschichtet werden, 5 Minuten getrocknet und anschließend an Luft im vorgeheizten Muffelofen bei 400°C für 60 min getempert werden. Die auf diese Weise hergestellte Elektrode 2 wird anschließend in eine Lithiumschmelze getaucht.

In einem weiteren Ausführungsbeispiel kann auch eine NMC-Elektrode für 30 s in eine isopropanolische Suspension von Zinkoxid-Nanopartikeln getränkt werden, 5 Minuten getrocknet und anschließend an Luft im vorgeheizten Muffelofen bei 80°C für 10 min getempert werden. Die auf diese Weise hergestellte Elektrode 2 wird anschließend in eine Lithiumschmelze getaucht.

In einem weiteren Ausführungsbeispiel kann auch eine Si-Elektrode mit einer Kupferfolie als temporäres Substrat, das die dünne Lithiumschicht enthält unter Druck und Temperatur in Kontakt gebracht werden, um das Lithium zum Fließen zu bringen. Nach dem Übertrag des Lithiums vom temporären Substrat auf die Si-Elektrode 2 wird das temporäre Substrat entfernt. Die auf diese Weise hergestellte Elektrode 2 wird anschließend in eine Lithiumschmelze getaucht.

In einem weiteren Ausführungsbeispiel kann auch das pulverförmige Elektroden-Ausgangsmaterial mit einer lithiophilen Oberfläche versehen werden. Anschließend wird das Material standardmäßig zu einer Elektrode 2 verarbeitet und wie hier beschrieben, mit flüssigem Lithium beschichtet.

Während sich beispielsweise Lithiumkugeln auf einer unbehandelten Oberfläche einer Kupferfolie nicht zum Benetzen eignen, kann bei einem Erwärmen in Argon auf ungefähr 200 °C bei einer wie beschrieben behandelten Oberfläche die Lithiumkugel die Folienoberfläche benetzen. Somit können Elektroden für Sekundärbatterien wie Lithium-Ionen-Batterien, Lithium-Luft-Batterien, Lithium-Schwefel-Batterien oder Festkörperbatterien oder Elektroden 2 für Primärbatterien wie Lithium-Thionylchlorid-Batterien, Lithium-Manganoxid-Batterien, Lithium-Schwefeloxid-Batterien, Lithium-Kohlenstoffmonofluorid-Batterien, Lithium-Iod-Batterien oder Lithium-Eisensulfid-Batterien hergestellt werden.

Anstelle von Elektroden 2 kann man analog auch Separatoren oder temporäre Substrate so behandeln.

Lediglich in den Ausführungsbeispielen offenbarte Merkmale der verschiedenen Ausführungsformen können miteinander kombiniert und einzeln beansprucht werden.

## Patentansprüche

1. Verfahren zur Beschichtung von Elektroden von lithiumbasierten elektrischen Energiespeicherelementen, bei dem Lithium (1) mit einer Menge in eine jeweilige Elektrode (2) eingebracht wird, mit der irreversible Lithiumverluste, die während Entlade- und Ladevorgängen auftreten, vollständig ausgeglichen werden mit 1 % - 20 % der Elektrodenkapazität oder die gesamte für eine Lithiierung der Elektrode benötigte Lithiummenge mit 101 % - 120 % der Elektrodenkapazität zur Verfügung gestellt wird, wobei
Lithium (1) in einer Menge, die 1 % bis 120 % der Kapazität der Elektrode (2) des jeweiligen elektrischen Energiespeicherelements entspricht, auf - oder eingebracht wird und dabei
das geschmolzene metallische Lithium in flüssiger Phase während des Auftrags auf eine Oberfläche oder des Einbringens in einen jeweiligen Elektrodenwerkstoff eingesetzt wird wobei
vor dem Einbringen des Lithiums (1) zwischen dem Lithium (1) und der Oberfläche von Elektrodenwerkstoff und/oder einer Oberfläche eines temporären Substrats, auf der eine Lithiumschicht aufgebracht wird, eine Schicht (3), die mit einem lithiophilen Material gebildet ist, aufgebracht oder ausgebildet wird und
eine Oberfläche des Elektrodenwerkstoffs und/oder eines temporären Substrats mit dem jeweiligen lithiophilen Material beschichtet und anschließend flüssiges Lithium (1) mit über die jeweilige Oberfläche konstanter Schichtdicke aufgebracht wird und
bei einer Beschichtung einer Oberfläche eines temporären Substrats nach dem Aufbringen der Lithiumschicht, diese Oberfläche mit der Oberfläche der jeweiligen Elektrode in berührenden Kontakt gebracht und infolge erhöhter Temperatur, wirkendem Druck und/oder die Wirkung eines elektrischen Feldes die Lithiumschicht nach erneuter Verflüssigung diese Lithiumschicht von der Oberfläche des temporären Substrats auf eine Oberfläche der Elektrode (2) übertragen wird.

2. Verfahren nach Anspruch 1, **dadurch gekennzeichnet**, das flüssige Lithium (1) anschließend durch Erstarren in die feste Phase überführt wird oder direkt beim Auftrag in den Elektrodenwerkstoff lithiiert.

3. Verfahren nach einem der vorhergehenden Ansprüche, **dadurch gekennzeichnet, dass** als lithiiophiles Material Metalloxide, insbesondere Zinkoxid, Kupferoxid, Nickeloxid, Zinnoxid, Siliziumoxid, Aluminiumoxid aber auch oxidierte Kohlenstoffe, Interkalationsmaterialien, insbesondere Kohlenstoffe, oder Legierungsbildner, insbesondere Silizium, Antimon, Zinn, Gold eingesetzt wird.

4. Verfahren nach einem der vorhergehenden Ansprüche, **dadurch gekennzeichnet, dass** Partikel des lithiophilen Materials in den jeweiligen Elektrodenwerkstoff eingebracht werden und dann das geschmolzene Lithium (1) flüssig aufgebracht wird.

5. Verfahren nach einem der vorhergehenden Ansprüche, **dadurch gekennzeichnet, dass** Lithium (1) durch Laserschmelzen, Schmelzen mittels einer Heizvorrichtung, Rakeln, Aufbringen mittels einer Schlitzdüse, Sprühen, Streichen, Tauchbeschichten, thermisches Spritzen und/oder Laminieren auf die mit dem jeweiligen lithiophilen Material gebildete Schicht (3) aufgebracht wird.

6. Verfahren nach einem der vorhergehenden Ansprüche, **dadurch gekennzeichnet, dass** die mit dem lithiophilen Material gebildete Schicht (3) mit einer Dicke zwischen 0,1 nm und 1000 nm, vorzugsweise zwischen 1 nm und 500 nm, besonders vorzugsweise zwischen 10 nm und 200 nm ausgebildet wird.

7. Verfahren nach einem der vorhergehenden Ansprüche, **dadurch gekennzeichnet, dass** die Schicht (3), die mit Metalloxid gebildet ist, durch Oxidation des Werkstoffs aus dem die jeweilige Elektrode (2)und/oder ein temporäres Substrat an der jeweiligen Oberfläche ausgebildet oder
in Form einer Suspension, in der Partikel des Metalloxids enthalten sind, als Beschichtung auf die jeweilige Oberfläche oder die Oberfläche von Lithiumpartikeln aufgebracht wird.

## Claims

1. A method for coating electrodes of lithium-based electrical energy storage elements, in which lithium (1) is introduced into a respective electrode (2) in such an amount that irreversible lithium losses that occur during discharging and charging processes are fully compensated for with 1% - 20% of the electrode capacity or the total lithium amount required for lithiation of the electrode is provided with 101% - 120% of the electrode capacity, wherein
lithium (1) is applied or introduced in an amount corresponding to 1% to 120% of the capacity of the electrode (2) of the respective electrical energy storage element, and also
the molten metallic lithium is used in liquid phase during application to a surface or introduction into a respective electrode material, wherein
before the lithium (1) is introduced, a layer (3) that is formed with a lithiophilic material is applied or formed between the lithium (1) and the surface of electrode material and/or a surface of a temporary substrate to which a lithium layer is applied, and
a surface of the electrode material and/or of a temporary substrate is coated with the respective lithiophilic material and liquid lithium (1) is subsequently applied with a layer thickness which is constant over the respective surface, and
in the case of a coating of a surface of a temporary substrate after the application of the lithium layer, this surface is brought into touching contact with the surface of the respective electrode and, as a result of elevated temperature, acting pressure and/or the action of an electric field, the lithium layer is transferred from the surface of the temporary substrate to a surface of the electrode (2) after renewed liquefaction.

2. The method according to claim 1, **characterized in that** the liquid lithium (1) is then converted by solidification into the solid phase or is lithiated directly upon application into the electrode material.

3. The method according to any one of the preceding claims, **characterized in that** metal oxides, in particular zinc oxide, copper oxide, nickel oxide, tin oxide, silicon oxide, aluminium oxide, but also oxidized carbons, intercalation materials, in particular carbons, or alloy formers, in particular silicon, antimony, tin, gold, are used as lithiophilic material.

4. The method according to any one of the preceding claims, **characterized in that** particles of the lithiophilic material are introduced into the respective electrode material and then the molten lithium (1) is applied in liquid form.

5. The method according to any one of the preceding claims, **characterized in that** lithium (1) is applied by laser melting, melting by means of a heating device, coating with a doctor blade, application by means of a slotted nozzle, spraying, brushing, dip-coating, thermal spraying and/or lamination to the layer (3) formed with the respective lithiophilic material.

6. The method according to any one of the preceding claims, **characterized in that** the layer (3) formed with the lithiophilic material is formed with a thickness between 0.1 nm and 1000 nm, preferably between 1 nm and 500 nm, particularly preferably between 10 nm and 200 nm.

7. The method according to any one of the preceding claims, **characterized in that** the layer (3) which is formed with metal oxide
is applied by oxidation of the material from which the respective electrode (2) and/or a temporary substrate on the respective surface is formed or
is applied in the form of a suspension in which particles of the metal oxide are contained as a coating to the respective surface or the surface of lithium particles.

## Revendications

1. Procédé de revêtement d'électrodes d'éléments d'accumulation d'énergie électrique à base de lithium, dans lequel du lithium (1) est introduit dans une électrode (2) respective, avec une quantité avec laquelle les pertes de lithium irréversibles qui surviennent pendant les processus de décharge et de charge sont entièrement compensées avec 1 %- 20 % de la capacité de l'électrode ou toute la quantité de lithium nécessaire pour une lithiation de l'électrode est mise à disposition avec 101 %-120 % de la capacité de l'électrode, dans lequel
le lithium (1) est appliqué ou introduit dans une quantité qui correspond à 1 % à 120 % de la capacité de l'électrode (2) de l'élément d'accumulation d'énergie électrique respectif et
le lithium métallique fondu est introduit en phase liquide pendant l'application sur une surface ou l'introduction dans un matériau d'électrode respectif, dans lequel
avant l'introduction du lithium (1), entre le lithium (1) et la surface du matériau d'électrode et/ou une surface d'un substrat temporaire, sur lequel est appliquée une couche de lithium, une couche (3), constituée d'un matériau lithiophile, est appliquée ou réalisée et
une surface du matériau d'électrode et/ou d'un substrat temporaire est revêtue avec le matériau lithiophile puis le lithium (1) liquide est appliqué avec une épaisseur de couche constante sur la surface respective et
lors d'un revêtement d'un substrat temporaire après l'application de la couche de lithium, cette surface est mise en contact avec la surface de l'électrode respective et, du fait d'une augmentation de température, d'une pression et/ou de l'action d'un champ électrique, après une nouvelle liquéfaction, cette couche de lithium est transmise de la surface du substrat temporaire vers une surface de l'électrode (2).

2. Procédé selon la revendication 1, **caractérisé en ce que** le lithium (1) liquide passe en phase solide par solidification ou est lithié directement lors de l'application dans le matériau d'électrode.

3. Procédé selon l'une des revendications précédentes, **caractérisé en ce que**, en tant que matériau lithiophile, on utilise des oxydes métalliques, plus particulièrement de l'oxyde de zinc, oxyde de cuivre, oxyde de nickel, oxyde d'étain, oxyde de silicium, oxyde d'aluminium mais également des carbones oxydés, des matériaux d'intercalation, plus particulièrement des carbones, ou des agents formateurs d'alliages, plus particulièrement du silicium, de l'antimoine, de l'étain, de l'or.

4. Procédé selon l'une des revendications précédentes, **caractérisé en ce que** des particules du matériau lithiophile sont introduites dans le matériau d'électrode respectif puis le lithium (1) est appliqué sous forme liquide.

5. Procédé selon l'une des revendications précédentes, **caractérisé en ce que** le lithium (1) est appliqué par fusion laser, fusion au moyen d'un dispositif de chauffage, raclage, application au moyen d'une buse à fente, pulvérisation, enduction, revêtement par immersion, projection thermique et/ou laminage, sur la couche (3) formée avec le matériau lithiophile respectif.

6. Procédé selon l'une des revendications précédentes, **caractérisé en ce que** la couche (3) formée avec le matériau lithiophile est réalisée avec une épaisseur entre 0,1 nm et 1 000 nm, de préférence entre 1 nm et 500 nm, plus particulièrement de préférence entre 10 nm et 200 nm.

7. Procédé selon l'une des revendications précédentes, **caractérisé en ce que** la couche (3), formée avec un oxyde métallique,
est appliquée par oxydation du matériau dont l'électrode (2) respective et/ou un substrat temporaire sur la surface respective sont constitués ou
bien sous la forme d'une suspension dans laquelle les particules de l'oxyde métallique sont contenues, en tant que revêtement sur la surface respective ou la surface de particules de lithium.
